# EUROPEAN PATENT APPLICATION

(11) **EP 3 315 054 A1**
(43) Date of publication of application: **02.05.2018**
(21) Application number: 16813739.6
(22) Date of filing: 24.06.2016
(51) Int. Cl.: A47J 27/00, A47J 36/00

(54) **COOKING SYSTEM**

(30) Priority: 25.06.2015 CN 201510358092; 25.06.2015 CN 201510358056; 25.06.2015 CN 201510358067; 25.06.2015 CN 201510359898
(71) Applicant: Hua, Xiaoling, Shenzhen, Guangdong 528000 (CN)
(72) Inventor: Hua, Xiaoling, Shenzhen, Guangdong 528000 (CN)
(74) Representative: Richardt Patentanwälte PartG mbB
(86) International application number: PCT/CN2016/087000
(87) International publication number: WO 2016/206623

(57) **Abstract**

The present invention provides a cooking system, comprising:
a pot support,
a barrel-shaped pot body, which is for containing cooking ingredients and is rotatably arranged on the pot body support,
a rotation driving device, which is connected with the pot body and is for driving the pot body to rotate around the rotating axis of the pot body,
an angle adjusting device, which is connected with the pot body and/or the pot body support and is provided for adjusting the inclination angle of the rotating axis of the pot body,
a heating device, which is provided for heating up the pot body and/or cooking ingredients inside the pot body,
an arithmetic processor, and
an instruction input device.
in which the cooking system further comprises a control device which controls the pot body, according to a rotating speed control instruction, to rotate in a first mode at a first rotating speed which is lower than a critical rotating speed and which enables cooking ingredients to rotate along with the pot body and rotatingly ascend for substantially 90 degrees to 180 degrees and then fall down. The cooking system of the present invention is capable of rapidly and uniformly heating up cooking ingredients.

## Description

### FIELD OF THE INVENTION

The present invention relates to a cooking system; more particularly, the present invention relates to a cooking system for cooking dishes.

### BACKGROUND OF THE INVENTION

Stir-frying is a process of frying cooking ingredients in the pot , generally featuring quick stirring of the ingredients in the heated pot, so that they are rapidly and uniformly heated, thereby producing crisp, tender, fresh and fragrant dishes. In the art some automatic or semi-automatic cooking systems are developed to replace or reduce manual labors in cooking.

Chinese Patent No. 200810029877.8 discloses a cooking equipment comprising a body bracket, a pot disposed on the body bracket, a rotation mechanism and a turning-over mechanism in which the pot is in shape of a barrel, a hemisphere or the like with an opening at its end, and with a stirring mechanism installed inside the pot. The rotation mechanism is connected to the pot body to drive the pot to rotate around a rotation axis of the pot, and the turning-over mechanism is connected to the pot to drive the pot to turn around a turning-over axis together with the body bracket. When the cooking equipment is in working mode, the angle between the rotation axis of the pot and horizontal plane is in the range of 0 degree to 60 degree.The pot has two degrees of freedom, which allow the pot to rotate and turn over, so that the dishes are automatically stirred and taken out.

Chinese patent application No. 201210575195.3 discloses a bidirectional automatic stir-frying pot which comprises a pot body, a pot cover, a variable-frequency motor, an inner rotating shaft,a supporting base, a stir-frying fork, an outer rotating shaft, a stir-frying blade and a switch, wherein the pot body and pot cover form a horizontally-arranged cylinder; the variable frequency motor is provided with three buttons: high, medium and low, to drive the rotating shaft to rotate; the rotating shaft is horizontally placed in the center of the pot body, supported by the supporting base at the two ends of the rotating shaft; the supporting base is used for supporting the pot body, the rotating shaft and for accommodating a heating device.The stir-frying fork is arranged at the center of the pot body perpendicular to the rotating shaft, and fork teeth with different sizes are arranged at the end portion of the stir-frying fork; and the upper end of the stir-frying blade is square; the switch is arranged on the pot body for adjusting the working mode of the pot body. After the cooking ingredients enter the pot body, the pot body, the stir-frying blade and the stir-frying fork are respectively driven by the variable-frequency motor to perform 360-degree circular motion, thereby continuously overturning the cooking ingredients in the pot body. The frequency of the stir-frying is adjusted by controlling the frequency of the motor, finally finishing the processing of the dishes.

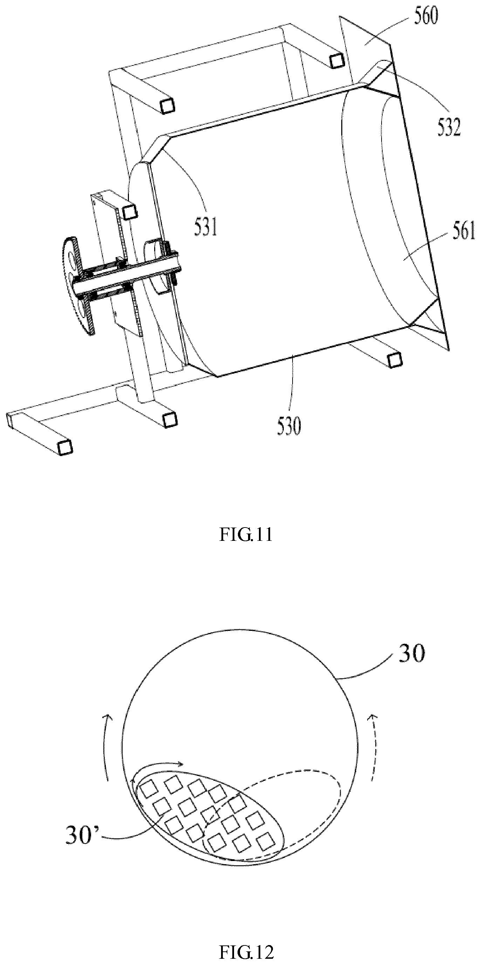

In the course of using the above cooking apparatus, as shown in FIG. 12, the cooking ingredients 30'are largely deposited on the bottom of the pot 30, and although a stir-frying mechanism is arranged to stir the cooking ingredients so that ingredients at different positions in the pot and different surfaces of the ingredients are more likely to be in contact with the pot body, it still fails to eliminate the accumulation of the ingredients during stir-frying process,and the core part of the accumulated ingredients cannot be effectively stir-fried. The result is: only a few parts of the cooking ingredients are in direct contact with the pot body, with the contact area between the cooking ingredients and the pot body less than 40% of the surface area of the inner wall of the pot body. That is to say, the cooking ingredients can only be heated in a stacked mode, resulting in non-uniform heating of the cooking ingredients and low heating and cooking efficiency. Moreover, when using a stir-frying mechanism like this for stir-frying, cooking ingredients, subject to large external battering force, are likely to split apart, failing to retain their original shapes and their totality. This is a great drawback in view of people's strict demand for "shape" in Chinese dishes.

Meanwhile, cooking ingredients are in contact with each other and with the pot body only by a small acting force; with a large heat resistance, heat is hindered from being transferred to cooking ingredients that are far away from the inner wall of the pot body, resulting in the non-uniform heating of the cooking ingredients and low heating and cooking efficiency.

To satisfy the requirement for stir-frying dishes, namely, cooking ingredients should be rapidly fried in a hot pot, it is often necessary to arrange a larger pot when using the above cooking equipment for cooking for increasing the contact area between the cooking ingredients and the pot body and for improving the heating efficiency. However, such an arrangement is disadvantageous in that the size of the cooking equipment is quite large. Otherwise, only a few cooking ingredients can be cooked each time if quality and taste of the cooked dishes are to be guaranteed.

### SUMMARY OF THE INVENTION

It is, therefore, one of the objectives of the present invention, to solve the above drawbacks in the prior art, to provide a cooking system, which can not only rapidly and uniformly heat up cooking ingredients, but also effectively improve stir-frying effects.

To complete the above-mentioned objective of the present invention, the present invention provides a cooking system which comprises:
a pot body support,
a barrel-shaped pot body, which is for containing cooking ingredients and is rotatably arranged on the pot body support,
a rotation driving device, which is connected with the pot body and is for driving the pot body to rotate around the rotating axis of the pot body,
an angle adjusting device, which is connected with the pot body and/or the pot body support and is provided for adjusting the inclination angle of the rotating axis of the pot body,
a heating device, which is provided for heating up the pot body and/or cooking ingredients inside the pot body;
an arithmetic processor, and
an instruction input device.

According to the present invention the above cooking system further comprises a control device which controls the pot body, based on a rotating speed control instruction, to rotate in a first mode at a first rotating speed which is lower than a critical rotating speed (here it is an angular speed)and which enables cooking ingredients to rotate along with the pot body for substantially 90 degrees to 180 degrees, preferably 90 degrees to 135 degrees and then fall down. The critical rotating speed is the lowest rotating speed which enables the cooking ingredients to be attached onto the inner surface of the pot body and conduct circular motion along with the pot body.

In the present invention, the angle coordinate of the rotation of the cooking ingredients is as follows: the geometric center of the inner periphery of the cross section of the pot body is taken as a coordinate center, the lowest point of the rotating track of the pot body as a zero point, and the rotating direction of the pot body as the positive direction.

In the present invention, the rotary axis of the pot body is a connecting line which runs substantially through the geometric center of the inner periphery of each cross section of the pot body. The inner periphery of the cross section of the pot body is generally formed as a circle or a polygon.When the inner periphery of the cross section of the pot body is a circle, the geometric center of the pot body is the circle center of the pot body; when the inner circumference of the cross section of the pot body is a regular polygon, the geometric center of the pot body is the circle center of inscribed circle or the circumcircle of the pot body.

In the present invention, the arithmetic processor can be a processor, a printed circuit board, a chip or the like, and is used for executing and/or processing instructions of the cooking program. The instruction input device is provided for inputting data and information to the cooking system, and is used for communicating the cooking system with a user or other equipment and also for interior communications of the cooking system itself. The instruction input device may be a keyboard, a mouse, a camera, a scanner, a light pen, a handwriting input board, a voice input device, an interface such as an internet interface and the like. The input data may be numerical data, and various non-numerical data such as graphs,images, sound and the like. The rotating speed control instructions may be outputted by the cooking program, or may be set or configured by other means. For example, the input device may be input by means of the input device of the cooking system. The control device is an apparatus or a component in the cooking system, and one of its functions is to control the pot body to rotate at a certain rotating speed according to the rotating speed control instruction. The cooking program may be stored in the storage device of the cooking system or may be input by a means which is external to the cooking system. For example, the cooking program is stored in a cloud server, and a cooking program is called from the cloud server when the cooking system is working.

In the present invention, the critical rotating speed is not a fixed value. Instead, it varies with the inner diameter of the pot body, the inclination angle of the rotating axis of the pot body and the characteristics of the cooking ingredients (such as their viscosity and shape), the quantity of the cooking ingredients and the like. One obvious example is that the critical rotating speed is higher when there are more cooking ingredients in the pot body than when there are less cooking ingredients. This is due to the fact that the rotating radius of cooking ingredients which are far away from the inner wall surface of the pot body is smaller than that of cooking ingredients close to the inner wall surface of the pot body. Hence, in order to rotate cooking ingredients far away from the inner wall surface of the pot body synchronously along with the pot body, the rotating speed should be higher than that of cooking ingredients close to the inner wall surface of the pot body so as to provide greater centrifugal force.

In the present invention, the first mode is also referred to as a stir-frying mode, in which the cooking ingredients are being stir-fried. The first rotating speed in the first mode may be a constant value, or a change value of phase change or continuous change. Generally speaking, the first rotating speed is 0.6 to 0.95 times of the critical rotating speed, preferably 0.7 to 0.95 times, more preferably 0.8 to 0.95 times; the higher the first rotating speed is, the higher the falling position of the cooking ingredients will be, and the more desirable the stir-frying effect will be. It is worth-mentioning that centrifugal forces of cooking ingredients vary with their distances from the inner wall surface of the pot body, hence cooking ingredients in different distances from the inner wall surface of the pot body also fall from different angles. For instance, cooking ingredients close to the inner wall surface of the pot body usually have a larger falling angle than cooking ingredients far away from the inner wall surface of the pot body. That is to say, cooking ingredients fall within a certain angle range, not just at a position of a certain determined angle. Moreover, since the dropped cooking ingredients rotate and ascend again under the driving of the pot body, the falling of the cooking ingredients is a circulative and continuous process.

In the cooking system of the present invention, the first rotating speed of the pot body in the first mode is controlled so that the cooking ingredients substantially fall after rotating for 90 degrees to 180 degrees along with the rotation of the pot body. This has the advantages that the cooking ingredients fall in a parabolic curve under the inertia, and afterwards, instead of being stacked at the bottom of the pot body, most of the cooking ingredients are attached to the pot body again and rotatingly ascend along with the pot body, so that the cooking ingredients remain relatively dispersed, and hence have a large contact area with the pot body, enabling the pot body to fully exchange heat with the cooking ingredients, so that the cooking ingredients can be heated more quickly and uniformly, thereby improving cooking speed and quality. Furthermore, the improvement of the dispersion of the cooking ingredients leads to larger the utilization area of the pot body. Hence, the cooking system is able to cook more cooking ingredients each time and has higher cooking capacity compared with other cooking systems in the art. Still further, the present invention is advantageous in that that all the cooking ingredients in the pot are sufficiently stir-fried with substantially the same stirring. Since the cooking ingredients are not subject to external forces in the cooking process, they are more likely to retain the original shapes so that the dishes are more desirable in color, fragrance, taste and shape. Furthermore, parabolic motions of the cooking ingredients facilitate the dissipation of water vapor generated after the surfaces of the cooking ingredients are heated,thereby producing dry and fragrant dishes after the stir-fry. Otherwise, if the water vapor fails to be emitted in time, the cooking ingredients become loose and soft, losing the typical"dry and fragrant" characteristics of "stir-frying" cooking.

In contrast, when cooking equipment in the prior art is used for cooking, if there are a relatively large amount of cooking ingredients in the pot body, the cooking ingredients are seriously stacked and thus mainly conduct rolling motion when the pot body rotates. Such an arrangement fails to achieve the same effect which can be achieved in the present invention in which the cooking ingredients do parabolic motion. That is to say, cooking equipment in the prior art fails to meet the requirements that the cooking ingredients are uniformly mixed and heated and that water vapor on the surface of the material is dissipated in time.

In a more preferable embodiment of the invention, the first rotating speed is controlled to enable the cooking ingredients to fall after rotating about 135 degrees to 180 degree along with the pot body, thereby further improving heating and stir-frying effects.

According to one embodiment of the present invention, the pot body is internally provided with a force mechanism capable of driving cooking ingredients to rotatingly ascend along with the pot body. The force mechanism comprises a plurality of force applying pieces which are matched with the inner wall of the pot body and continuously or intermittently extends between the two longitudinal ends of the pot body, for providing supporting force to the cooking ingredients. The plurality of force applying pieces have a substantially uniform distribution in the circumferential direction of the pot body. When the pot body rotates, the force applying pieces push the cooking ingredients to move, and a supporting force is provided for the cooking ingredients during the rise of the cooking ingredients, and under the action of the centrifugal force, the pot body drives the cooking ingredients to rotate, allowing the cooking ingredients to be uniformly distributed in the circumferential direction of the pot body.

In the above embodiment, the force mechanism are preferably provided with 2-9 force applying pieces. These force applying pieces are distributed in an annular array in the pot body. This is advantageous in facilitating the cooking ingredients to rotate along with the pot body, so that the cooking ingredients are more uniformly distributed in the circumferential direction of the pot body. In particular, for granular cooking ingredients, since it is more difficult for them to rotate along with the pot body are difficult, more force applying pieces are often needed.

Furthermore, in the above embodiment, the height of the force applying pieces is preferably 0.5 -5.0 cm, more preferably 1.0 cm to 3.0 cm, allowing cooking ingredients to have a proper thickness on the inner wall of the pot body.

In the cooking system of the present invention, the force mechanism may be fixedly arranged on the inner wall of the pot body. For example, the force applying pieces may comprise ridge lines or ribs formed on the inner wall of the pot body, or may be a protruding part and/or a concave part distributed on the inner peripheral surface of the pot body. The rib lines or ribs can continuously or intermittently extend between the two longitudinal ends of the pot body,so that the cooking ingredients can be more uniformly distributed in the longitudinal direction of the pot body. For example, the ridge lines or ribs may be formed by combining a set of columnar protrusions arranged at intervals in the longitudinal direction of the pot body.

In the cooking system of the present invention, the force mechanism may also be rotatably arranged relative to the pot body. The force mechanism may comprise a rotating shaft and one or more force applying pieces fixedly connected with the rotating shaft, the rotating shaft and the pot body being oppositely arranged. This arrangement is advantageous in that when the force mechanism rotates synchronously with the pot body, the force applying pieces provide for cooking ingredients,a driving force and a supporting force, which, matched with a centrifugal force, drive the cooking ingredients to rotate along with the pot body; when the force mechanism rotates relative to the pot body, the cooking ingredients can be further stir-fried, and cooking ingredients which stick to the inner wall of the pot body are removed.

According to the above embodiment, the gap between the force applying pieces and the inner wall of the pot body may be 0.1-5.0mm, preferably 0.1mm to 3.0mm., more preferably from 0.1 mm to 1.0 mm. The height of the force applying pieces may be 0.5cm to 5.0cm, and preferably 1.0cm to 3.0cm. Preferably, the surface of the force apply piece which is in contact with or close to the inner wall of the pot body is an elastic surface, to prevent clamping of the mechanical part; for example, the force applying pieces may be a steel piece with teflon on the surface layer.

In the above embodiment, it is preferable that the force applying pieces continuously or intermittently extend between the two longitudinal ends of the pot body. In addition, there are preferably 3-9 force applying pieces , wherein the 3-9 force applying pieces are arrayed annularly in the pot body.

According to another embodiment of the invention, the heating device is an indirect heating device and/or a gaseous medium heater, wherein the indirect heating device is used for heating the pot body from the exterior of the pot body, the gaseous medium heater is used for injecting a gaseous heating medium into the pot body so as to directly heat up the cooking ingredients.

According to the above embodiment, the indirect heating device is preferably configured to heat at least one half of the outer peripheral surface of the pot body in the longitudinal direction of the pot body. This configuration is matched with the disperseness of the cooking ingredients in the pot body and the rotation of the pot body, so that the indirect heating device is able to carry out distributed heating on the cooking ingredients in both the longitudinal direction and the circumferential direction at the same time, leading to more rapid and uniform heating of the cooking ingredients. More preferably, and the indirect heating device is configured to heat at least two thirds of the outer peripheral surface of the pot body in the longitudinal direction of the pot body to further enable more rapid and uniform heating of the cooking ingredients.

In the present invention, the indirect heating device is usually an electromagnetic heating device or a combustion heating device, which are usually equipped with relatively large heating power for meeting the need of "rapid frying the cooking ingredients in a hot pot"; the gaseous medium heater may be a hot air heating device, capable of achieving rapid and uniform heating of the cooking ingredients,thereby increasing cooking speed and improving the quality and taste of dishes.

The cooking system may further comprise a radiation heating device using infrared or light wave, or superheated steam heating device. These heating devices are the same as a gaseous medium heater. They are for directly heating cooking ingredients. In this sense, they are referred to as direct heating devices.

In general, an indirect heating device supplies heat for cooking most of time in the cooking process(in most cases it provides heat during in the entire cooking process), whereas a direct heating device is used at a certain stage of the cooking process (in most cases, it is used in the initial cooking stage, to rapidly cook the surfaces of the cooking ingredients while retaining the moisture and other nutrients of the cooking ingredients), providing a small portion of heat for the cooking process.

In a preferred embodiment of the invention, a combustion or electromagnetic heating device is used for heating the pot body from the exterior of the pot body, and hot air is injected into the pot body by a hot air heating device so as to directly heat up the cooking ingredients. The temperature of the hot air supplied by the hot air heating device is preferably controlled to be 100°C to 400°C, more preferably, 200°C to 300°C, so as to achieve more desirable heating and cooking effects.

Direct heating of the cooking ingredients by means of hot air has the following advantages: firstly, hot air enables the surface of the cooking ingredients to be quickly cooked to a certain degree while retaining their moisture and nutrients, thereby improving the quality and the taste of the dishes; secondly,hot air quickly takes away water vapor evaporated from the cooking ingredients so that the interior of the pot body has proper humidity necessary for desirable cooking effect; finally, hot air heating helps improve heating and cooking efficiency.

In Chinese patent No.20145008033.7, dual heat sources including a hot air heating device are also used for heating, but there's one drawback: cooking ingredients in the pot body are stacked in the pot body. The result is is that there is a small contact area between the hot air and the cooking ingredients, and basically only the surfaces of the accumulated cooking ingredients can only be heated,leaving rooms for improvement in its heating effect. In the present invention, cooking ingredients can be uniformly distributed on the inner wall of the pot body, reducing the need to heat up the inner wall of the pot body by means of hot air, and greatly increasing the contact area between the hot air and the cooking ingredients,thereby obviously improving the heating and cooking effects.

In addition, a dish (such as shredded potatoes) cooked by the cooking system with the dual heat sources provided by the present invention is found, much surprise to the inventor of the present invention, to have a pleasant fragrance and a sweeter taste. This is probably due to the fact the cooking system is capable of achieving a better heating effect, thereby facilitating the maillard effect in the cooking ingredients and thus generating a carbohydrate substance and a gas with a special flavor. In contrast, the dual-heat-source cooking equipment disclosed in Chinese Patent No. 20145008033.7 is not found to have such a cooking effect, probably due to its undesirable heating.

Preferably, a sealing device used for sealing the pot opening of the pot body is arranged on the pot body support, the sealing device being opened and closed. The sealing device is arranged to block gas from leaking from the inside of the pot body, so that for a period of time, more gas enters the pot body than gas flowing out of the pot body,allowing the pressure in the pot body to be greater than the pressure outside of the pot body. The sealing device may not completely seal the pot opening of the pot body. In one embodiment, the sealing device may be a pot cover which can be opened and closed at the position of a pot opening of the pot body. When closed, the pot cover blocks hot air from leaking from the inside of the pot body so as to provide a relative seal to the pot body.

According to the above embodiment, the sealing device enables the pressure in the pot body to be greater than the pressure in the external environment, so that the gaseous heating medium can fully enter the gaps of the cooking ingredients, increasing contact areas of the heating media with the cooking ingredients while reducing heat losses in the cooking process, thereby enhancing heating and cooking efficiency.

More preferably, the sealing device is formed with a gas inlet through which a gaseous medium heater injects a gaseous heating medium into the pot body, and/or the sealing device is provided with an gas outlet which can be adjusted in its diameter and/or can be opened or closed.

According to the above embodiment, considering that the gaseous heating medium flows upwards, the gas inlet is preferably formed on a position close to the lower part of the sealing device, so that the gaseous heating medium flows along a longer path in the pot body and has longer contacts with the cooking ingredients.

According to the above embodiment, water vapor and oil smoke in the pot body can be substantially discharged from the gas outlet to a subsequent processing device. In this way, not only the cooking environment is purified, the heat of the water vapor and the oil smoke discharged may also be reused. Preferably, the diameter of the gas outlet is adjustable and/or the gas outlet can be opened and closed, so that the internal pressure of the pot body can be controlled by adjusting the diameter or the opening and closing of the gas outlet.

n one embodiment of the invention, a control device, according to the rotating speed control instructions,controls the pot body to rotate in a second mode at a second rotating speed which is greater than or equal to the critical rotating speed, so that the cooking ingredients attach to the inner wall of the pot body and rotate along with the pot body. In the present invention, the second mode can also be referred to as an attached heating mode, i.e. most of the cooking ingredients are attached to the pot body and rotate synchronously along with the pot body. In practice, it is preferable that in the second mode, almost all cooking ingredients are attached to the pot body and rotate synchronously with the pot body. According to the present invention, cooking ingredients are attached to the pot body. However, this does not mean that all cooking ingredients on the pot body are in direct contact with the pot body. Instead, it means a layer of cooking ingredients having a certain thickness is formed on the inner wall of the pot body, wherein only cooking ingredients located on the outer side of the layer are in direct contact with the pot body.

In the cooking system, on one hand, the pot body rotates in a second mode at a second rotating speed greater than or equal to the critical rotating speed, allowing almost all of the cooking ingredients to be attached to almost the entire inner wall of the pot body, forming a more uniform thickness, and synchronously rotate along with the pot body. The cooking ingredients cover up to more than 90% of the total surface area of the inner wall of the pot body,so that the heating area of the pot body is fully utilized, facilitating heat to rapidly conducted to almost all cooking ingredients, and laying a foundation for improving heating efficiency and cooking productivity.On the other hand, due to the action of centrifugal force, cooking ingredients are in close contact with one another, and so are cooking ingredients with the inner wall of the pot body. This further increases heat transfer areas, reduces heat transfer distances and heat resistance, thereby improving heat transfer efficiency and laying a foundation for improving the heating efficiency. Therefore, the cooking system of the present invention is capable of carrying out distributed heating on the cooking ingredients and rapidly transferring heat, leading to rapid and uniform heating of the cooking ingredients. In addition, since heating areas of the pot body are effectively utilized, the cooking system of the present invention boasts a higher cooking capacity than cooking equipment disclosed in the art. With a cooking capacity of up to 2-3 times that of existing cooking equipment with the same volume of the pot body, the cooking system provided in the present invention is very suitable for large-scale dish cooking, and is particularly suitable for dining places such as dining halls, canteens, restaurants and the like at their peak hours.

In the present invention, the second rotating speed of the pot body in the second mode may be a constant value or a change value of phase change or continuous change as long as it is not lower than the critical rotation speed. Preferably, in the second mode, firstly, the pot body is controlled to rotate at a rotating speed equal to or slightly greater than the critical rotating speed, so that cooking ingredients have substantially uniform distribution on the inner wall of the pot body, and then the rotating speed of the pot body is increased to a higher value, so as to further increase the contact forces among the cooking ingredients themselves, and between the cooking ingredients and the inner wall of the pot body, so that the cooking ingredients are in closer contact with one another, and are more closely attached to the pot body, thereby further reducing heat resistance and improve heating efficiency, bringing about more uniform heating of the cooking ingredients. For example, firstly the pot body is controlled to rotate for a predetermined length of time at about 1.0 to 1.1 times or 1.0 to 1.3 times of the critical rotating speed, and then the rotating speed of the pot body is increased to be 1.3 to 2.0 times or 1.5 to 2.0 times of the critical rotating speed.

The present invention does not have any requirement for the rotating speed of the pot body during the feeding of cooking ingredients, and feeding can be carried out when the pot body is static or rotating at any speed. For example, certain viscous cooking ingredients, such as starched meat, are preferably fed in the first mode, so as to solve or reduce the problem of material agglomeration. This is because in the first mode, viscous cooking ingredients are fully scattered during the stir-frying process after the viscous cooking ingredients are put into the pot; meanwhile, their surfaces are heated and cooked, reducing their viscosity and possibility of their being agglomerated. In addition, since cooking ingredients are usually thrown into the pot body for multiple times or in multiple batches, the cooking ingredients can be more uniformly mixed in the first mode, providing more tasty dishes.

In the cooking system of the present invention, preferably, in the first mode,the inclination angle between the rotating axis of the pot body and the horizontal plane is greater than 0 degree and smaller than 20 degrees, and the pot body is inclined with the pot opening facing upward. More preferably, the inclination angle between the rotating axis of the pot body and the horizontal plane is greater than 0 degree and less than 15 degrees or is 5 -15 degrees; and still more preferably, greater than 0 degree and less than 10 degrees. In the process of stir-frying cooking ingredients,if the pot body is horizontally placed, cooking ingredients may collide with each other when they are falling down, and in that case a small portion of the cooking ingredients may move towards the pot opening and fall outside the pot body, resulting in waste of cooking ingredients and demand for frequent cleaning. Thus,if the pot body is controlled to be upwardly inclined, the problem of material overflow in the stir-frying process can be effectively reduced or prevented. However, the upward inclination angle of the pot body should not be too large, otherwise the cooking ingredients may be excessively accumulated around the rear part of the pot body,impairing stir-frying effects and the effective utilization of heating areas in the front part of the pot body. In addition, since the cooking ingredients are usually put at the position close to the pot opening of the pot body, if the pot body is controlled to have an appropriate upward inclination angle in the first mode, the cooking ingredients thrown into the pot body can be properly moved towards the rear part of the pot body, so that cooking ingredients are prevented from accumulating around the front part of the pot body, thereby improving cooking capacity.

According to another preferred embodiment of the present invention, the rotational axis of the pot body is substantially horizontal in the second mode. This arrangement has the advantage that, on one hand, cooking ingredients are rapidly and uniformly distributed on the entire inner wall of the pot body; on the other hand, after the cooking ingredients are attached to the pot body, the cooking ingredients are substantially static relative to the pot body, providing a convenience for readily controlling the heating and cooking process.In contrast,in the prior art, the rotating axis of the pot body is controlled to be substantially vertical. In that case, if the cooking ingredients are to be uniformly distributed on almost the entire inner wall of the pot body, the cooking ingredients are required to move upwards relative to the pot body while rotating along with the pot body. This is not only difficult to be implemented, but also requiring a more complex structure of the inner wall of the pot body, bringing difficulty to the control of the heating and cooking process.

According to the present invention, the inner peripheral surface of the pot body near the pot opening may be formed as a first inclined surface, the first inclined surface is inclined towards the rotating axis of the pot body in the direction in which the interior of the pot body points to the pot opening. The first inclined surface may be a conical inclined surface or an arc-shaped inclined surface. As mentioned above, in the process of stir-frying or mixing cooking ingredients, it is possible that cooking ingredients fall out of the pot body. Although this problem might be prevented or reduced by allowing the pot body to incline upward to a certain degree, the upward inclination of the pot body may result in the excessive accumulation of cooking ingredients around the rear part of the pot body. On the other hand, such arrangement may cause the different parts of the pot body to have different distances from the heating device in the longitudinal direction of the pot body, resulting in the uneven heating of the pot body in its longitudinal direction, further causing non-uniform heating of cooking ingredients. Contrarily, according to the present invention, arranging the first inclined surface prevents or reduces the overflowing of cooking ingredients, so that cooking ingredients can be stir-fried or mixed when the pot body has only a small upward inclination angle, and even when the pot body is horizontally placed,allowing the cooking ingredients to be uniformly distributed and heated in the longitudinal direction of the pot body.

In the present invention, the inner peripheral surface of the pot body opposite to the pot opening may be formed as a second inclined surface, and the second inclined surface is inclined towards the rotating axis of the pot body in the direction from the pot opening to the inside of the pot body. The second inclined surface may be a conical inclined surface or an arc-shaped inclined surface. As mentioned above, since the pot body usually has an upward inclination angle when cooking ingredients are being fed and stir-fried, the thickness of cooking ingredients located at the rear part of the pot body is generally greater than the thickness of the cooking ingredients located at the front part of the pot body. So is the case even after cooking ingredients are attached to the pot body. According to the invention, the thickness of the material positioned at the rear part of the pot body can be reduced by means of arranging a second inclined surface, so that the cooking ingredients have more uniform distribution in the longitudinal direction of the pot body,and cooking ingredients are more uniformly heated.

In the present invention,a third inclined surface which is matched with the pot opening is formed on the side which the pot cover faces the pot opening. In the direction from the pot opening to the pot cover, the third inclined surface is inclined towards the rotating axis of the pot body. The third inclined surface may be a conical inclined surface or an arc-shaped inclined surface, so that in the cooking process,even when cooking ingredients fall towards the pot opening, they will fall on the third inclined surface, and, guided by the third inclined surface, slide again into the pot body.

In another embodiment of the invention, the pot cover is further provided with a feeding funnel which can be opened and closed, so that cooking ingredients can be readily fed into the pot body, and the pot body remains relatively sealed during the entire cooking process.The present invention allows both manual feeding and automatic feeding by means of an automatic feeding device.

In another embodiment of the invention, the cooking system further comprises a humidity sensor for detecting humidity in the pot body, and based on the compared result between the measured humidity value with the humidity value set by the cooking program, the volume, the pressure and/or the speed of hot wind supplied by the hot air heating device are controlled or adjusted. Preferably, the cooking system further comprises a temperature sensor used for detecting the temperature in the pot body, and based on the compared result between the measured temperature value and the temperature value set by the cooking program, the temperature of hot air provided by the hot air heating device and/or the heating intensity of the combustion or electromagnetic heating device are controlled or adjusted.

In the cooking process, a certain amount of water vapor may be evaporated from most cooking ingredients. However, too much moisture formed by the water vapor will debase the stir-frying effect. Therefore, it is necessary to quickly discharge the water vapor to reduce humidity inside the pot body to a proper range. In Chinese Patent No. 20145008033.7, a cooking program is used for controlling or adjusting the volume, the pressure and/or the speed of the hot wind supplied by the hot air heating device,but the cooking program is set in advance. This is disadvantageous in that, the actual situation in the pot body in a cooking process varies a lot, e.g. when the amount and/or the characteristic of the cooking ingredients are different, the cooking environment inside the pot body also changes in a different way. In that case, humidity inside the pot body cannot be accurately controlled merely by using a cooking program to control or adjust the amount, the pressure and/or the speed of the hot wind supplied by the hot air heating device.In the cooking system of the present invention, a humidity sensor is used for dynamically detecting the humidity in the pot body, and based on the detected result, the volume, the pressure and/or the speed of hot wind provided by the hot air heating device are controlled or adjusted, enabling accurate controls over the humidity in the pot body under various conditions, thereby improving the quality of cooking.

According to one embodiment of the invention, the inner periphery of the cross section of the pot body may be a hexagon to a dodecagon, having 6 to 12 sides. The inner periphery of the cross section of the pot body being formed into a polygon is advantageous in that: firstly, the pot body can provide driving force and supporting force for cooking ingredients when the pot body rotates, so that the cooking ingredients can be readily driven to rotatingly rise under the driving of the pot body; secondly, different parts of the side surfaces of the inner wall of the pot body have different distances from the rotating axis in the direction around the rotating axis of the pot body, so that the cooking ingredients bear non-uniform centrifugal forces and thus can be readily flipped over, leading to more desirable stir-frying effect.

It should be noted that, although the cooking system of the present invention is mainly suitable for cooking dishes, especially for cooking Chinese dishes, it can also be used for treating, for example, tea leaves, medicinal cooking ingredients,melon seeds, peanuts, beans and other cooking ingredients that need heating treatment.

To set forth the objectives, embodiments and the advantages of the present invention more clearly, the present invention will be further described hereafter in detail with reference to the accompanying drawings and particular embodiments. In the accompanying drawings, the same numerals have the same reference meanings.

### DESCRIPTION TO THE DRAWINGS

FIG. 1 is a diagram showing the overall structure of a cooking system according to Embodiment 1 of the present invention, wherein the pot cover is open;
FIG. 2 is a diagram showing the overall structure of the cooking system in Embodiment 1 of the present invention in a first mode;
FIG. 3 is a diagram showing the overall structure of the cooking system in Embodiment 1 in a second mode according to the present invention;
FIG. 4 shows the cooking system according to Embodiment 1 of the present invention in which the cooking system is in a first mode, illustrating the distribution of cooking ingredients in the pot body and the moving tracks of cooking ingredients in the pot body;
FIG. 5 shows the cooking system according to Embodiment 1 of the present invention in which the cooking system is in a second mode, illustrating the distribution of cooking ingredients in the pot body and the moving tracks of cooking ingredients in the pot body;
FIG. 6 is a perspective view of a pot body and a pot body support in Embodiment 2 of the cooking system according to the present invention;
FIG. 7 is a three-dimensional cross-sectional view of a pot body in Embodiment 2 of the cooking system in the longitudinal direction of the pot body;
FIG. 8 is a three-dimensional sectional view of a pot body in a Embodiment 3 of the cooking system in the longitudinal direction of pot body;
FIG. 9 is a three-dimensional sectional view of the pot body in Embodiment 4 of the cooking system in the longitudinal direction of the pot body;
FIG. 10 is a three-dimensional sectional view of a pot body part in Embodiment 5 of the cooking system in the longitudinal direction of the pot body;
FIG. 11 is a three-dimensional cross-sectional view of the pot body in the longitudinal direction of the pot body according to embodiment 6 of the present invention;
FIG. 12 is a schematic diagram showing distribution and moving tracks of cooking ingredients in a pot body when the cooking equipment of the art is in a work mode.

### DESCRIPTION OF THE PREFERRED EMBODIMENTS

### Embodiment 1

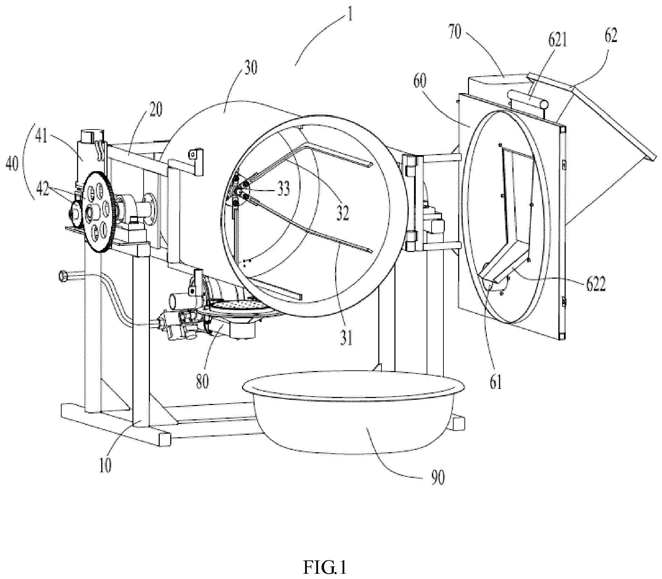

As shown in FIGS. 1-2, cooking system 1 according to the embodiment comprises an arithmetic processor, an instruction input device and a control device (not shown), a main body support 10, and a pot body support 20 rotatably arranged on the main body support 10, a pot body 30 which is rotatably arranged on the pot body support 20, an angle adjusting device 40 which is arranged on the main body support 20, a rotation driving device 50 which is arranged on the pot body support 20, and a pot cover 60 which is arranged on the pot body support 20 and can be opened and closed, a hot air heating device 70 which is arranged on the pot cover 60, a gas burner 80 which is arranged below the pot body 30 for heating up the pot body 30, and a dish discharging device 90 for unloading the cooked dishes.

The pot body 30 is barrel-shaped with the inner circumference of its cross section being circular, and the main body of the pot body is provided with an approximately equal inner diameter, and a pot opening is formed in the front end portion of the pot body, and the rear end portion is provided with a pot body rotating shaft (not shown) which extends in the rotating axis of the rear end portion and is hollow .Six blades 31 distributed in an annular array are rotatably arranged inside the pot body 30, the blades 31 being fixedly connected with a rotating shaft 33 through a connecting arm 32. The rotating shaft 33, being oppositely arranged with the rotating shaft of the pot body, penetrates through the rotating shaft of the pot body and is driven to rotate by a driving device(not shown). The blades 31 are closely adjacent to the inner wall of the pot body 30, and extends continuously between the two longitudinal ends of the pot body 30 in the direction of the rotational axis of the pot body 30. The connecting arm 32 is closely adjacent to the rear end surface of the pot body, and are integrally formed with the blades 31, and are detachably fixed on the rotating shaft 33 through screws.

An angle adjusting device 40 comprises a motor 41 and a gear transmission mechanism 42. The gear transmission mechanism 42 is fixedly connected with the pot body support 20. The motor 41 drives the pot body support 20 to deflect in the vertical plane through the gear transmission mechanism 42,further driving the pot body 30 to deflect in the vertical plane, so as to adjust the inclination angle of the rotating axis of the pot body 30. A rotating driving device 50 comprises a motor 51 and a gear transmission mechanism 52, and the gear transmission mechanism 52 is connected with the pot body rotating shaft. The motor 51 drives the pot body 30 to rotate around the rotating axis of the pot body 30 through the gear transmission mechanism 52.

The pot cover 60 is used for covering the pot opening of the pot body 30 in the cooking process. When the pot cover 60 is closed, a proper gap is formed between the pot cover 60 and the pot body 30, so that the pot body 30 does not interfere with the pot cover 60 in its rotating process while the pot body 30 remains relatively sealed. The pot cover 60 is provided with a feeding funnel 62 capable of being opened and closed.The feeding funnel 62 is provided with a gate 621, when the gate 621 is opened or closed, the feeding funnel 62 is correspondingly opened or closed. The bottom of the feeding funnel 62 has a downward inclined material guiding slot 622,which guide cooking ingredients in the feeding funnel 62 to enter the interior of the pot body 30.

The pot cover 60 is further provided with a gas inlet 61 which is located at a position close to the bottom of the pot cover 60. The gas inlet 61 is connected to an air supply duct (not shown) of the hot air heating device 70, and hot air generated by the hot air heating device 70 is ejected into the pot body 30 from the gas inlet 61 to directly heat up the cooking ingredients. Pushed by the hot air, water vapor and oil smoke inside the pot body 30 are able to overflow from the gap between the pot cover 60 and the pot body 30.

The hot air heating device 70 comprises a control device (not shown) for controlling the volume, pressure and/or speed of the hot air, and a hot air temperature adjusting device (not shown). A temperature and humidity sensor (not shown) is arranged on the pot cover 60 on the side adjacent to the pot body 30, and is used for measuring the temperature and the humidity inside the pot body 30. The cooking system compares the measured humidity with the humidity value set by the cooking program and/or and compares the measured temperature with the temperature value set by the cooking program, and based on the compared results, volume, pressure and/or speed of the hot air heating device are controlled or adjusted.

The working process of the cooking system 1 in this embodiment is described hereafter in combination with a preferred cooking process.

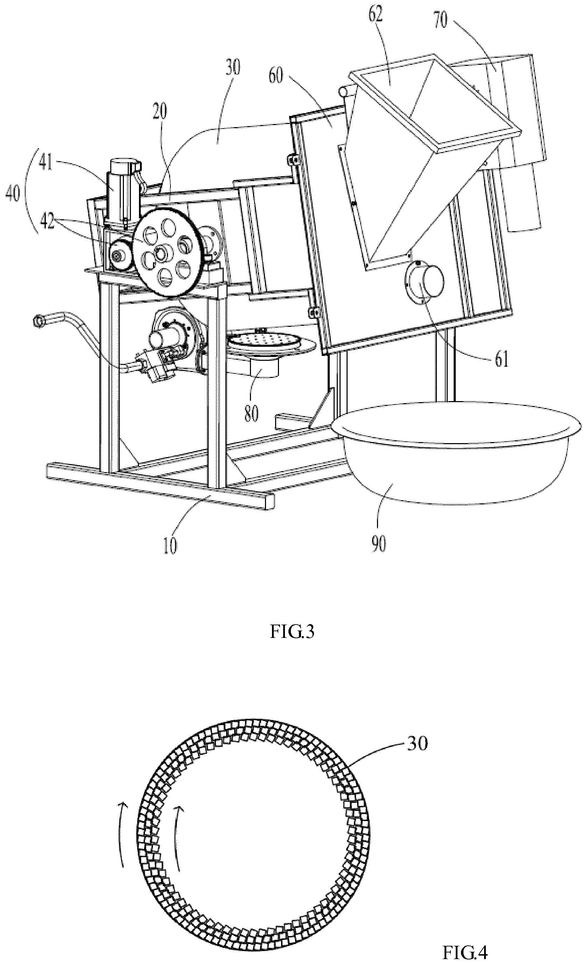

Firstly, the cooking program is executed, and an angle control instruction is outputted to the angle adjusting device 40 according to the cooking program,so as to adjust the inclination angle between the rotating axis of the pot body 30 and the horizontal plane to be about 5 degrees, and to adjust the pot body 30 to be inclined with its pot opening facing upward, as shown in FIG. 3. In addition, a rotation speed control command is outputted to the rotation driving device 50 according to the cooking program, for controlling the pot body 30 to rotate at about 0.5 times of the critical rotating speed.

Meanwhile, the user, based on the feeding instruction sent by the system, opens the gate 621 of the feeding funnel 62, puts cooking ingredients into the pot body 30, and then closes the gate 621 after completing the feeding. Since the pot body 30 is upwardly inclined, after the feeding is finished,more cooking ingredients will be distributed around the part far away from the pot opening of the pot body 30.

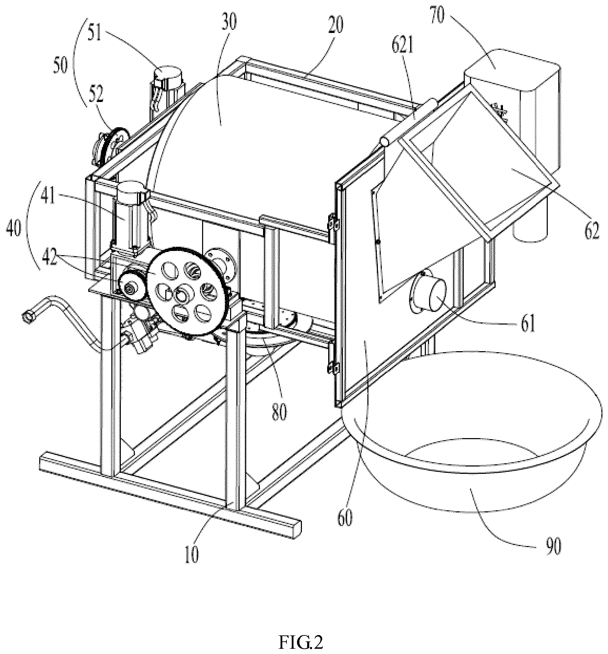

After the feeding is completed, the angle adjusting device 40 adjusts the rotating axis of the pot body 30 to be substantially horizontal,as shown in FIG. 2. While the inclination angle of the pot body 30 is adjusted, a rotation driving device 50 lifts the rotation speed of the pot body 30 to about 1.2 times of the critical rotation speed, and enables the blades 31 and the pot body 30 to rotate synchronously.

The angle adjusting device 40 adjusts the axis of rotation of the pot body 30 to be substantially horizontal. While the rotating speed of the pot body 30 is being lifted, the cooking ingredients gradually move towards the pot opening with the decrease of the inclination angle of the pot body 30, and become uniformly distributed in the axial direction of the pot body 30. Then, under the combined action of the supporting force applied by the blades 31 and the centrifugal force, the cooking ingredients are attached to the inner wall of the pot body 30, and synchronously rotate along with the pot body 30. In this way, the cooking ingredients have relatively uniform distribution in the axial direction and the circumferential direction of the pot body 30, and almost all of them are attached to the entire inner wall of the pot body 30 to form a cooking ingredients layer, fully utilizing heating areas of the pot body, as shown in FIG. 4. It is thus seen that cooking ingredients are attached to the inner wall of the pot body 30 step by step: the inclination angle of the rotating axis of the pot body 30 and the rotating speed of the pot body 30 are adjusted, so that at first the cooking ingredients are uniformly distributed in the axial direction of the pot body 30 and then are uniformly distributed in the circumferential direction of the pot body 30.

Thereafter, the rotation speed of the pot body 30 is further increased to about 1.7 times of the critical rotation speed; meanwhile, the cooking ingredients are subject to distributed heating and are rapidly and uniformly heated.

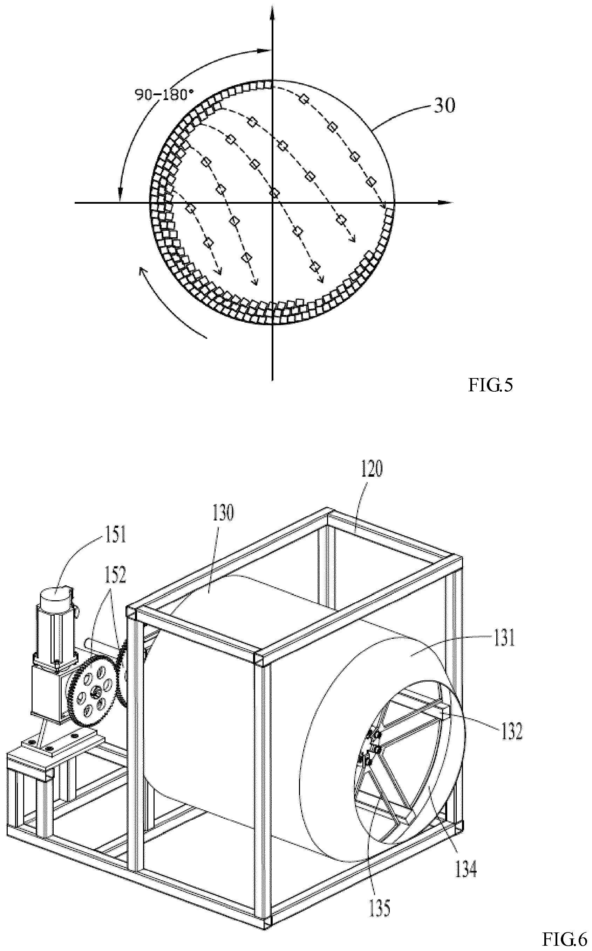

After the cooking ingredients rotate synchronously with the pot body 30 for a preset length of time, the angle adjusting device 40 again adjusts the inclination angle between the rotating axis of the pot body 30 and the horizontal plane to be about 5 degrees, and the pot body 30 is inclined with the pot opening facing upward, as shown in FIG. 3; while the inclination angle of the pot body 30 is being adjusted, a rotating driving device 50 is used for adjusting the rotating speed of the pot body 30 to be about 0.8 times of the critical rotating speed, as shown in FIG. 5. Along with the pot body, the cooking ingredients rotatingly rise to 90 degrees to 180 degrees and then fall down, and the fell cooking ingredients can be driven by the pot body 30 to rotate and ascend again, so that the cooking ingredients are continuously stir-fried. In this process, blades 31 and the pot body 30 are controlled to rotate intermittently relative to each other, thereby further improving the stir-frying effect and removing cooking ingredients possibly adhered to the pot body 30.

In the above steps, cooking ingredients are heated by enabling the hot air heating device 70 to cooperate with the gas burner 80. Meanwhile, based on the result of comparison between the measured humidity and the humidity value set by the cooking program and/or the result of comparison between the measured temperature and the temperature set by the cooking program, the volume, pressure and/or speed of the hot air supplied by the hot air heating device are controlled or adjusted;

After the above steps are repeated for a preset amount of times and the dishes are cooked, the pot body 30 is controlled to stop rotating. The user then opens the pot cover 60, and the system outputs an angle adjusting instruction to the angle adjusting device 40 to adjust the pot body 30 to be in a proper downward inclination state , so that dishes in the pot body 30 can be poured into a dish discharging device 90, completing the entire cooking process.

### Embodiment 2

As shown in FIG. 6, in this embodiment, a pot body 130 is rotatably arranged on a pot body support 120, a conical feature 131 which is inclined towards the rotating axis of the pot body 130 is formed at one end of the pot body adjacent to the pot opening of the pot body. The rotating shaft of the pot body is connected with a gear transmission mechanism 152, wherein a motor 151 drives the pot body 130 to rotate around the rotating shaft of the pot body 130 through the gear transmission mechanism 152.

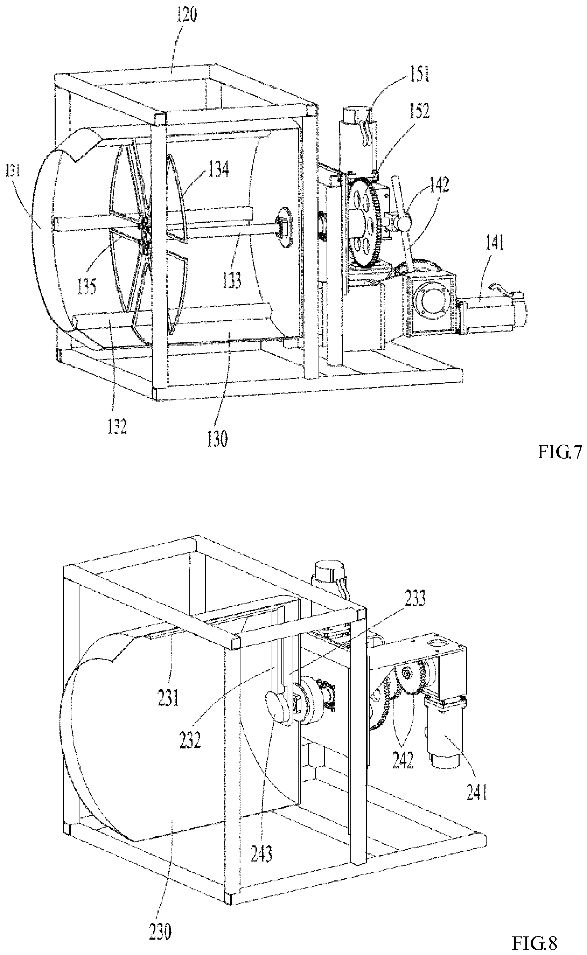

Referring to FIGS. 6 and 7, six ribs 132 are arranged on the inner wall of the pot body 130 in an annular array, the ribs 132 extend continuously between two longitudinal ends of the pot body 130 in the direction of the rotation axis of the pot body 130. Six scraping members 134 capable of doing reciprocating rectilinear motion along the rotating axis direction of the pot body 130 are arranged in the pot body 130, and each of the scraping members 134 is arranged between every two adjacent ribs 132. The scraping members 134 extend in the circumferential direction of the pot body 130 and are closely adjacent to the inner wall of the pot body 130. While the pot body 130 is rotating, the scraping member 134 are driven by the rib 132 to keep synchronous rotation with the pot body 130. The scraping members 134 are connected with a shaft 133 through connecting rods 135, and the connecting rods 135 and the scraping members 134 are integrally formed, and are detachably fixed on the shaft 133 through a screw. The shaft 133 penetrates through the rotating shaft of the pot body and extends out of the pot body 30, and is operatively connected with the crank linkage mechanism 142. A motor 141 drives a crank linkage mechanism 142 to move through the gear transmission mechanism, so that the scraping members 134 are enabled to do reciprocating rectilinear motion in the direction of the rotating axis of the pot body 130.

The structures of other parts of the cooking system in this embodiment are the same as those of Embodiment 1, so descriptions of the same parts will be omitted herein. The working process of the cooking system of Embodiment 2 will be hereafter described in conjunction with a preferred cooking process as follows:
Firstly, a cooking program is executed, and an angle control instruction is inputted to an angle adjusting device according to the cooking program, the inclination angle between the rotating axis of the pot body 130 and the horizontal plane is adjusted to be about 10 degrees, and the pot body 130 is inclined with its pot opening facing upward. In addition, a rotation speed control command is outputted to the rotation driving device according to the cooking program, and the pot body 130 is controlled to rotate at about 0.4 times of the critical rotation speed. At this moment, the user, based on the feeding prompt sent by the system, feeds the cooking ingredients into the pot body 130, and closes the gate after completing the feeding.

After the feeding is completed, the angle adjusting device adjusts the rotating axis of the pot body 130 to be substantially horizontal. While the inclination angle of the pot body 130 is being adjusted, the rotating driving device lifts the rotating speed of the pot body 130 to about 1.3 times of the critical rotating speed. In the meantime, under the action of the ribs 132 and the centrifugal force, the cooking ingredients are almost all attached to and uniformly distributed on almost the entire inner wall of the pot body 130 and synchronously rotate along with the pot body 130. In this process, the cooking ingredients are distributively,rapidly and uniformly heated.

After the cooking ingredients rotate synchronously with the pot body 130 for a preset length of time, the angle adjusting device adjusts the inclination angle between the rotating axis of the pot body 130 and the horizontal plane to be about 5 degrees, and the pot body 130 is inclined with the pot opening facing upwardly. When the inclination angle of the pot body 130 being adjusted, the rotating driving device adjusts the rotating speed of the pot body 130 to be about 0.9 times of the critical rotating speed, and the cooking ingredients rotatingly ascend with the pot body for about 120 degrees to 180 degrees and then fall down, and dropped cooking ingredients rotate again under the driving of the pot body 130 and the ribs 132, so that the cooking ingredients are continuously stir-fried. In this process, the scraping members 134 are controlled to do reciprocating motion, further improving the stir-frying effect, and removing some cooking ingredients which are adhered to the pot body 30.

The above-mentioned steps are sequentially repeated for a predetermined number of times before completing the dish cooking.

### Embodiment 3

As shown in FIG. 8, in this embodiment, a scraping member 231 which is capable of extending and retracting along the radial direction of the pot body 230 is arranged in the pot body 230. The scraping member 231 extends continuously between the two longitudinal ends of the pot body 230 in the direction of the rotation axis of the pot body 230, and is fixedly connected with a slide bar 232 at the end which is far away from the pot opening.

The slide bar 232 is slidably mounted on a fixing base 233,which is fixedly installed in the pot body 230. The longitudinal end of the slide bar 232 abuts against a cam 243, and the cam 243 is connected with a gear transmission mechanism 242 through a rotating shaft penetrating through the rotating shaft of the pot body. The motor 241 drives the cam 243 to rotate through the gear transmission mechanism 242, so that the scraping member 231 extends and retracts along the radial direction of the pot body 230. When extended, the scraping member 231 is closely adjacent to the inner wall of the pot body 230 at the highest point of the rotating track of the pot body, and when retracted, the scraping member 231 is far away from the inner wall of the pot body 230. The structures of other components of the cooking system are the same as those of Embodiment 1, hence descriptions of the same parts are omitted herein.

The working process of the cooking system of Embodiment 2 is as follows:
Firstly, a cooking program is executed, and an angle control instruction is outputted to an angle adjusting device according to the cooking program, and the inclination angle between the rotating axis of the pot body 230 and the horizontal plane is adjusted to be about 15 degrees, and the pot body 230 is inclined with the pot opening facing upward. A rotation speed control command is outputted to the rotation driving device according to the cooking program, and the control pot body 230 is controlled to rotate at about 0.7 times of the critical rotating speed. At this time, the cooking ingredients is fed into the pot body 230.

After the feeding is completed, the angle adjusting device adjusts the rotating axis of the pot body 230 to be substantially horizontal; while the inclination angle of the pot body 230 is being adjusted, the rotating driving device lifts up the rotating speed of the pot body 230 to about 1.1 times of the critical rotating speed.The material scraping member 231 is controlled to be in a retracted state and under the action of centrifugal force, the cooking ingredients are almost all attached to and uniformly distributed on almost the entire inner wall of the pot body 230 and synchronously rotate along with the pot body 230. In this process, the cooking ingredients are distributively, and therefore rapidly and uniformly heated.

After the cooking ingredients rotate synchronously with the pot body 230 for a preset length of time, the angle adjusting device adjusts the inclination angle between the rotating axis of the pot body 230 and the horizontal plane to be about 10 degrees, and the pot body 230 is inclined with the pot opening facing upward; while the inclination angle of the pot body 230 is being adjusted, the scraping member 231 is controlled to move to an extended state.At this time, the scraping member 231 applies a resistance force to the cooking ingredients to scrape down the cooking ingredients from the pot body 230, and the dropped cooking ingredients are attached to the pot body 230 again under the action of centrifugal force and rotate along with the pot body. In this way, the cooking ingredients are continuously stir-fried.

The above-mentioned steps are sequentially repeated a predetermined number of times before completing the dish cooking.

### Embodiment 4

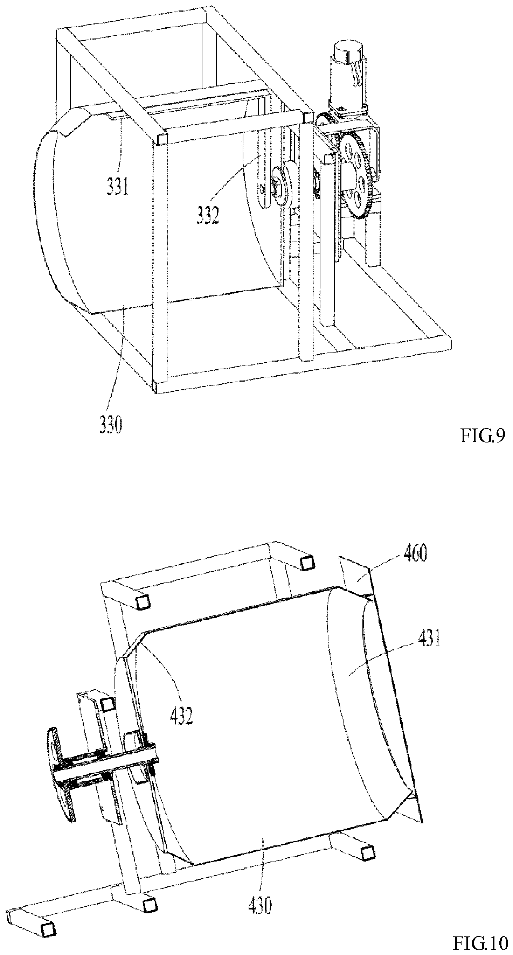

As shown in FIG. 9, in this embodiment, a scraping member 331 is fixedly arranged in the pot body 330, the scraping member 331 extends continuously between the two longitudinal ends of the pot body 330 in the direction of the rotation axis of the pot body 330, and is roughly fixed at the highest point of the rotating track of the pot body; The end of the scraping member 331 which is away from the pot opening is fixedly connected with the connecting piece 332; the connecting piece 332 is fixed to a fixed shaft, and the fixed shaft penetrates through the rotating shaft of the pot body and is fixedly connected with the pot body support. The structures of other parts of the cooking system in this embodiment are the same as those of Embodiment 1, and the descriptions of the same parts are omitted herein.

The working process of the cooking system of this embodiment is as follows:
Firstly, a cooking program is executed, and an angle control instruction is outputted to an angle adjusting device according to the cooking program, and the inclination angle between the rotating axis of the pot body 330 and the horizontal plane is adjusted to be about 8 degrees, and the pot body 330 is inclined with the pot opening facing upward. In addition, a rotation speed control command is outputted to the rotation driving device according to the cooking program, and the control pot body 330 is controlled to rotate at about 0.4 times of the critical rotating speed. At this time, cooking ingredients are fed into the pot body 330.

After the feeding is completed, the angle adjusting device adjusts the inclination angle between the rotating axis of the pot body 330 and the horizontal plane to be about 5 degrees. While the inclination angle of the pot body 330 is being adjusted, the rotating driving device lifts the rotating speed of the pot body 330 to 1.1 times of the critical rotating speed, cooking ingredients become attached to the pot body under the action of centrifugal force and rotates,along with the pot body 330, to the position where the scraping member 331 is arranged, and are scraped down by the scraping member 331. Afterwards, the dropped cooking ingredients rotate again along with the pot body 330. This process is repeated until the dishes are cooked.

### Embodiment 5

Embodiment 5 differs from Embodiment 1 only in the structure of the pot body. FIG. 10 schematically shows a pot body 430 and a pot cover 460 in this embodiment. As shown in FIG. 10, one end of the pot body 430 where the pot opening is arranged is provided with a conical feature 431.In the direction from the interior of the pot body to the pot opening, the conical feature 431 is inclined towards the rotating axis of the pot body 430.A conical feature 432 is arranged at another end of the pot body which opposite to the pot opening.In the direction from the pot opening to the interior of the pot body, the conical feature 432 is inclined towards the rotating axis of the pot body 430. During the rotating process of the pot body 430, the conical feature 432 is capable of properly pushing the cooking ingredients towards the pot opening, so that the cooking ingredients have more uniform distribution in the longitudinal direction of the pot body, with the surface of the pot body more fully utilized.

### Embodiment 6

FIG. 11 schematically shows a pot body 530 and a pot cover 560 of this embodiment. As shown in FIG. 11, in this embodiment, the pot body 530 is provided with a conical pot opening 532 which expands outwards in the radial direction of the pot body 530, and a conical feature 531 is arranged at the pot body 530, at the end which opposites the pot opening 532. In the direction from the pot opening 532 to the inside of the pot body, and the conical feature 531 is inclined towards the rotating axis of the pot body 530. A conical surface 561 which is matched with the pot opening 532 is formed on the pot cover 560, on the side which faces the pot opening 532. The conical surface 561 is inclined towards the rotating axis of the pot body 530 in the direction from the pot cover 560 to the pot opening 532, and extends into the pot body from the pot opening 532 and is closely adjacent to the inner wall of the pot body. The structures of other parts of the cooking system in this embodiment are the same as those of Embodiment 1, and therefore descriptions of the same parts will be omitted herein.

### Embodiment 7

Embodiment 7 differs from Embodiment 2 in the mode of stir-frying. Embodiment 7 comprises the following stir-frying steps: controlling a pot body to rotate at a rotating speed greater than or equal to a critical rotating speed, and controlling the scraping member to do reciprocating rectilinear motion, so that cooking ingredients are separated from the pot body under the action of the scraping member, and are thus stir-fried.

### Embodiment 8

The difference between Embodiment 8 and Embodiment 2 is as follows: the inner periphery of the cross section of the pot body in Embodiment 8 is regularly octagonal, and no rib is arranged on the inner wall of the pot body.

### Embodiment 9

The difference between Embodiment 9 and above-mentioned embodiments is as follows: in Embodiment 9, the gas burner heats up approximately two thirds of the outer peripheral surface of the pot body in the longitudinal direction of the pot body.

It should be noted that aspects of the embodiments described above may be combined and/or replaced with one another, unless there is mutual repulsion between the combination and/or the replacement.

For example, after the feeding is completed, the control device, according to the rotating speed control instruction, is able to control the pot body to keep rotating at a speed smaller than the critical rotating speed, so that the cooking ingredients are rotated,along with the pot body, for substantially 90 degrees to 180 degrees, preferably 90 degrees to 135 degrees, and then fall down (the first mode), so as to guarantee the distribution uniformity of cooking ingredients and thereby ensures that the cooking ingredients are fully heated. The control device, according to the rotating speed control instruction, controls the pot body to rotate at a rotating speed greater than or equal to the critical rotating speed all the time (the second mode). This arrangement has the advantage that the heating speed of the cooking ingredients can be further improved. In addition, after the feeding is completed, the control device controls the pot body to rotate according to the order of the first mode to the second mode, and the pot body can also be controlled to rotate according to the order of the second mode to the first mode; the first mode and the second mode can be respectively executed one or a plurality of times until the cooking is completed.

When the pot body is controlled to work alternately in the first mode and the second mode, the execution time of each second mode may be controlled to be 5-60 seconds, preferably 10-45 seconds, more preferably, 15-30 seconds. If the duration is too short, it may result in undesirable heating effect, with the cooking ingredients not fully cooked; if this time period is too long, it may result in too much moisture generated by the cooking ingredients and poor stir-frying quality.

Although the present invention has been described in terms of above embodiments, it should be understood that, any equivalent amendments or improvements that do not depart from the scope of the present invention made by persons of ordinary skill in the art, are covered by the scope of the present invention.

## Claims

1. A cooking system, which comprises:
a pot body support,
a barrel-shaped pot body, which is rotatably arranged on the pot body support for containing cooking ingredients,
a rotation driving device, which is connected with the pot body to drive the pot body to rotate around the rotating axis of the pot body,
an angle adjusting device, which is connected with the pot body and/or the pot body support to adjust the inclination angle of the rotating axis of the pot body,
a heating device, which is provided for heating up the pot body and/or the cooking ingredients inside the pot body,
an arithmetic processor,
an instruction input device, and
a control device,
wherein the control device is capable of controlling the pot body, according to a rotating speed control instruction, to rotate in a first mode at a first rotating speed lower than a critical rotating speed to make cooking ingredients to rotate along with the pot body for substantially 90 degrees to 180 degrees, preferably 90 degrees to 135 degrees and then fall down,
wherein the critical rotating speed is the lowest rotating speed which enables the cooking ingredients to be attached onto the inner surface of the pot body to conduct circular motion along with the pot body.

2. The cooking system according to claim 1, wherein the pot body is internally provided with a force mechanism which is capable of driving the cooking ingredients to rotate along with the pot body; wherein the force mechanism comprises a plurality of force applying pieces which are matched with the inner wall of the pot body and continuously or intermittently extend between the two longitudinal ends of the pot body to provide supporting force for the cooking ingredients; and wherein the plurality of force applying pieces have a substantially uniform distribution in the circumferential direction of the pot body.

3. The cooking system according to claim 2, wherein the number of the force applying pieces is between 2-9, the height of the force applying pieces is 0.5 -5.0 cm, preferably 1.0 cm to 3.0 cm, and the force applying pieces are fixedly arranged on the inner wall of the pot body.

4. The cooking system according to claim 1, wherein the heating device is an indirect heating device and/or a gaseous medium heater; and wherein the indirect heating device is used for heating the pot body from the exterior of the pot body, the gaseous medium heater is used for injecting a gaseous heating medium into the pot body so as to directly heat the cooking ingredients, and the indirect heating device is configured to heat at least one half of, preferably at least two thirds of, the outer peripheral surface of the pot body in the longitudinal direction of the pot body.

5. The cooking system according to claim 4, wherein a sealing device used for sealing the pot opening of the pot body is arranged on the pot body support in which the sealing device is configured to block gas from leaking from the inside of the pot body so that more gas enters into the pot body than flowing out of the pot body to maintain the pressure inside the pot body being greater than the pressure outside of the pot body for a period of time.

6. The cooking system according to claim 5, wherein the sealing device is provided with a gas inlet through which the gaseous medium heater injects a gaseous heating medium into the pot body, and/or the sealing device is provided with a gas outlet in which its diameter can be adjusted and/or it can be opened or closed.

7. The cooking system according to anyone of claims 1-6, wherein the control device controls the pot body, according to rotating speed control instructions, to rotate in a second mode at a second rotating speed which is greater than or equal to the critical rotating speed so that the cooking ingredients are attached onto the inner surface of the pot body and rotate along with the pot body.

8. The cooking system according to claim 7, wherein in the first mode the inclination angle between the rotating axis of the pot body and the horizontal plane is greater than 0 degree and smaller than 20 degrees, preferably 5-15 degrees, with the pot opening facing upward; and in the second mode the rotational axis of the pot body is substantially horizontal.

9. The cooking system according to claim 3, wherein the force applying pieces comprise ridge lines or ribs formed on the inner wall of the pot body.

10. The cooking system according to anyone of claims 1-6, wherein the inner periphery of the cross section of the pot body is a polygon, from a hexagon to a dodecagon.
